# EUROPÄISCHE PATENTSCHRIFT

(11) **EP 2 063 285 B1**
(45) Veröffentlichungstag und Bekanntmachung des Hinweises auf die Patenterteilung: **22.02.2012**
(21) Anmeldenummer: 08019665.2
(22) Anmeldetag: 11.11.2008
(51) Int. Cl.: G01S 5/00, G07C 1/26

(54) **Verfahren zur Durchführung von Taubenrennen im Taubensport**
Method for the implementation of pigeon races in pigeon sport
Procédé destiné à l'exécution de courses de pigeons dans les sports de pigeons

(30) Priorität: 13.11.2007 DE 102007054425
(43) Veröffentlichungstag der Anmeldung: 27.05.2009
(73) Patentinhaber: Gantner Pigeon Systems GmbH, 6780 Schruns (AT)
(72) Erfinder: Gantner, Michael, 6780 Schruns (AT)
(74) Vertreter: Riebling, Peter

(56) Entgegenhaltungen:
- WO-A2-01/41468
- DE-U1- 29 701 049
- DE-U1- 29 915 592
- "Pigeons to set up a smog blog" NEW SCIENTIST, REED BUSINESS INFORMATION, SURREY, GB, Bd. 2537, 4. Februar 2006 (2006-02-04), Seite 29, XP009112688 ISSN: 0262-4079 [gefunden am 2006-02-02]
- DATABASE EPODOC EUROPEAN PATENT OFFICE, THE HAGUE, NL; XP002518933 & BG 109 480 A (GETSOV PETUR [BG]; SIMEONOV PAVEL [BG]; BOYCHEV BOYCHO [BG]; MARDIROSY) 31. August 2006 (2006-08-31)

## Beschreibung

Die Erfindung betrifft ein Verfahren zur Durchführung von Taubenrennen im Taubensport.

Mit dem Gegenstand der DE 100 24 805 A1 ist es lediglich bekannt geworden, Standorte eines Taubenschlages an die Zentraleinheit mit einem GPS-System zu ermitteln und diese Standortdaten an die Zentraleinheit zu übermitteln. Damit kann der Standort des Taubenschlages im Taubenrennen festgestellt werden. Ferner ist es bekannt, Tauben mit sogenannten Datenloggern zu versehen, wobei die während des Fluges ermittelten Daten (z. B. Flugzeit, Tageshelligkeit, Temperatur, Luftdruck und Luftfeuchtigkeit) aufgezeichnet und nach der Ankunft der Taube im Taubenschlag ausgelesen werden. Eine solche Technik lässt die Flugroute der Taube nur im nach hinein nachvollziehen.

Traum jedes Taubenzüchters ist die Verfolgung des Fluges der Taube (oder auch anderen Tiere) in "Echtzeit". Die jetzigen Systeme, die eingesetzt werden, erfassen lediglich die Ankunftszeit mit der man dann auf die Flugdauer und somit auf die Durchschnittsgeschwindigkeit zurückrechnen kann. Dies reicht aus für die Zeitmessung im Taubensport. Jedoch hat man keinerlei Information, wo sich die Taube während ihres Fluges gerade befindet. Diese zusätzliche Information könnte eine neue Ära im Taubensport einleiten. Es gibt zwar schon Systeme, die auf Basis eines kleinen GPS Empfängers die Flugroute der Taube aufzeichnen. Diese kann erst nach der Ankunft ausgewertet werden und hat daher nur eine sehr begrenzte Anwendung. Das Ausschlaggebende ist die Übermittlung der Position in Echtzeit.

In dem Artikel "Pigeons to set up a smog block" NEW SCIENTIST, REED BUSINESS INFORMATION, SURREY, GB, Bd.2537, 4. Februar 2006 wird eine Vorrichtung zur Luftqualitätsüberwachung mithilfe einer Taube beschrieben. Hierbei wird eine Taube mit einem Luftverschmutzungssensor, einem GPS-Empfänger und einem Modul für Mobiltelefone ausgestattet. Ziel ist es, eine Überwachung der Luftqualität mithilfe der Taube durchzuführen. Als Ergebnis erhält man eine interaktive Karte mit Luftdaten, die von den jeweiligen Einwohnern eingesehen werden kann. Für die Lokalisierung der Taube und die Übertragung der gewonnenen Daten sind zwei unterschiedliche Bauteile nötig.

Der GPS-Empfänger erfasst die aktuelle Position der Taube und gibt diese Daten über das Mobiltelefon an eine Zentrale weiter. Parallel dazu werden die durch den Luftsensor gewonnen Daten über die Mobilfunkeinheit an die Zentrale übermittelt. Alle drei Bauteile stellen jedoch ein hohes Gewicht für die Anordnung, die von der Taube mit geführt wird, dar.

Die DE 29701049 U1 offenbart ein Verfahren zur Durchführung von Taubenrennen im Taubensport, bei dem die Taube einen aktiven Transponder trägt, welcher während des Fluges mit unterschiedlichen Peilempfängern eines Peilempfängern-Netzes kommuniziert, wobei die aktuelle Ortsinformation über eine Datenleitung übertragen wird und eine Zentralstation die vom Peilempfänger ermittelte aktuelle Position auswertet.

Die WO 01/41468 A offenbart allgemein die Übertragung der Ortsinformation eines Mobilfunkgerätes.

Die Positionierung erfolgt hier mit Hilfe der Ortsinformation der gegenwärtig aktiven Mobilfunkzelle sowie alternativ oder zusätlich mit Hilfe von SPS.

Die Erfindung legt die Aufgabe zugrunde, ein Verfahren zur Durchführung von Taubenrennen im Taubensport so weiterzubilden, dass die aktuelle Flugroute der Taube in Echtzeit an einen Nutzer übertragen werden kann.

Zur Lösung der gestellten Aufgabe dient die im Patentanspruch 1 wiedergegebene technische Lehre.

Wesentliches Merkmal der Erfindung ist, die Taube mit einem GSM oder UMTS- oder einem anderen geeigneten zellorientierten Mobilfunksystem-Modul zu verbinden, welches diese trägt, wobei das Modul während der Flugzeit der Taube eine (ständige oder zeitweilig unterbrochene) Mobilfunkverbindung mit dem Mobilfunknetz eines Mobilfunknetzbetreibers herstellt. Für die Ermittlung und Übertragung der an der Taube erzeugten Ortsinformation und deren mobilfunkgestützte Übertragung werden hierbei die folgenden Verfahren beansprucht.
1. als aktuelle Ortsinformation wird die Ortsinformation der gegenwärtig aktiven Mobilfunkzelle dem Nutzer mitgeteilt. Hierbei kann dann auf einen GPS-Empfänger und die Weiterleitung seiner Daten von der Taube über das Mobilfunknetz verzichtet werden. Damit ergibt sich ein besonders kleiner, leichter und stromsparender Aufbau der Anordnung, die von der Taube mitgeführt wird.
2. Optional werden als zusätzliche aktuelle Ortsinformation an der Taube die GPS-Daten erhoben und über das Mobilfunknetz von der Taube an den Nutzer übertragen. Zusätzlich zum zellfähigen Modul wird hierbei ein GPS-Empfänger mitgeführt, dessen Daten über die Mobilfunkschnittstelle an die bodenseitige Basisstation übertragen wird. Die Ortung mit einem GPS-Empfänger ist genauer als die Ermittlung der Mobilfunkzelle.

Das GSM-Modul ist nach einer ersten Ausführung so programmiert, dass es die erhobenen Daten an einen internetfähigen bodenseitigen Empfänger schickt, der seinerseits die Daten über das Internet an einen Datenbankserver sendet, auf dessen Daten der Veranstalter oder der Eigentümer der Taube oder eine andere Person Zugriff haben.

In einer zweiten Ausführung ist das GSM-Modul ist so programmiert, dass es eine Reihe von Einwählnummern aufweist, die geeignet sind, dieses GSM-Modul mit dem Nutzermodul eines Teilnehmers oder Veranstalters eines Taubenrennens über das übliche Mobilfunksystem zu verbinden.

Die hierfür verwendeten Übertragungsverfahren sind beliebig. Es kann nach dem üblichen GSM-Standard übertragen werden oder auch nach dem GSPR-Standard oder nach UMTS-Standard.

Das System besteht im Wesentlichen aus 3 Teilen:

### 1. Die Positionsbestimmung:

Dieser Teil des Systems ermittelt die aktuelle Position des Tieres. Diese Information kann von der Zelleninformation der Datenübertragung (z. B. GSM obilfunkzelle kommen sowie gegebenenfalls von einem GPS Empfänger. Zusätzlich kann diese Information angereichert werden durch z. B. eine Höhenmessung oder Temperatur/Luftdruck/Geschwindigkeit.

### 2. Datenübertragung:

Zur Datenübertragung werden die Mobilfunknetze verwendet. Hier kann z. B. ein GSM oder UMTS Sender die Informationen periodisch oder kontinuierlich an eine Datenbank schicken. Diese Datenbank kann diese Informationen dann weiterverarbeiten und visualisieren.

### 3. Energieversorgung:

Als Energieversorgung kann eine Batterie oder auch eine alternative Energiequelle dienen (z. B. Solarzellen, Muskel- oder Windkraft)

Die Herausforderungen liegen vor allem im minimalen Gewicht, kompakter Bauform und maximaler Betriebsdauer.

Man könnte ein Minimalsystem mit einer aufladbaren Lithium Batterie und einem GSM Modem aufbauen. Dieses GSM Modem würde sich während des Fluges in die verschiedenen Zellen einbuchen. Diese Buchungsinformation könnte man vom Provider beziehen und damit eine Lokalisierung durchführen.

Um diese Lokalisierung zu präzisieren könnte man das System zusätzlich mit einem GPS (GPS, Galileo etc.) Empfänger ausstatten und die Positionsdaten direkt zu einer Auswertung versenden.

Wichtig bei der Erfindung ist, dass das Taubenmodul entweder ständig oder auf Anforderung durch den Nutzer oder in bestimmten Zeitabständen Mobilfunkkontakt mit der jeweiligen Mobilfunkzelle aufnimmt, die das Tier überfliegt. Durch die Einbuchung in die bestimmte Mobilfunkzelle wird vom Mobilfunknetzbetreiber der aktuelle Aufenthaltsort der Taube erkannt. Der Mobilfunknetzbetreiber kann nun diese Ortungsinformationen an die Taube zurücksenden, welche diese in eine SMS-Nachricht einbaut und diese SMS an den Nutzer übermittelt.

In einer anderen Ausführungsform kann der Mobilfunknetzbetreiber auch diese Ortungsinformation unmittelbar als SMS oder als Hauptnachricht auf einem Mobilfunkverbindungskanal in üblicher Weise dem Nutzer auf sein Mobilfunkgerät oder einen internetfähigen Datenbankserver übertragen.

Damit ergibt sich die Möglichkeit, dass der Nutzer auf einer grafischen Anzeige eine Landkarte vorhält, in der die aktuelle Position der Taube als wandernder Punkt sichtbar ist. Auf diese Weise kann zu jeder Zeit die aktuelle Position der Taube in einer geografischen Umgebung Online festgestellt werden.

Durch Anklicken der aktuellen Position können dem Benutzer dann noch weitere Daten zugänglich gemacht werden, die in der SMS-Nachricht enthalten sind. Solche Daten sind beispielsweise die Umgebungsdaten, die Zeit, die Flughöhe, die Temperatur, die Feuchtigkeit und andere für den Taubensport relevante Daten.

Im Folgenden wird die Erfindung anhand von lediglich einen Ausführungsweg darstellenden Zeichnungen näher eriäutert.

Es zeigen:
- Figur 1:: schematisierte Darstellung eines Taubenmoduls nach der Erfindung;
- Figur 2:: eine Taube mit darauf befestigtem Taubenmodul;
- Figur 3:: schematisiert die Darstellung eines GSM-Mobilfunknetzes;
- Figur 4:: schematisiert die Zusammensetzung einer SMS-Nachricht;
- Figur 5:: ein Blockschaltbild eines GSM-Moduls;
- Figur 6:: Blockschaltbild eines GSM-Moduls in Kombination mit einem GPS- Modul.

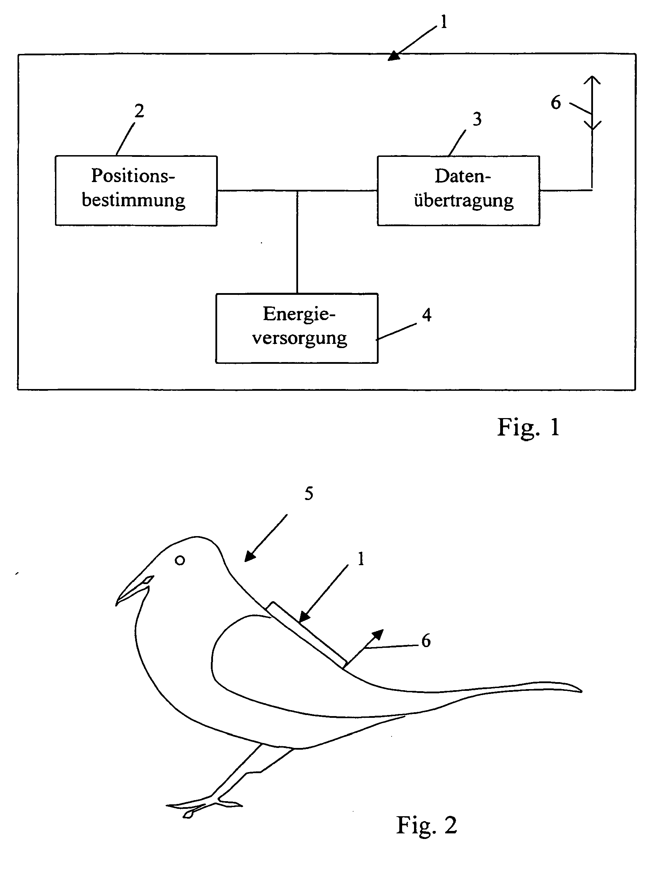

In Figur 1 ist allgemein ein Taubenmodul 1 dargestellt, welches im wesentlichen aus einem Positionsmodul 2 und einer dazugehörenden Datenübertragung in Form eines Mobilfunkmoduls 3 besteht. Die genannten Module 2, 3 sind von einer Energieversorgung 4 versorgt.

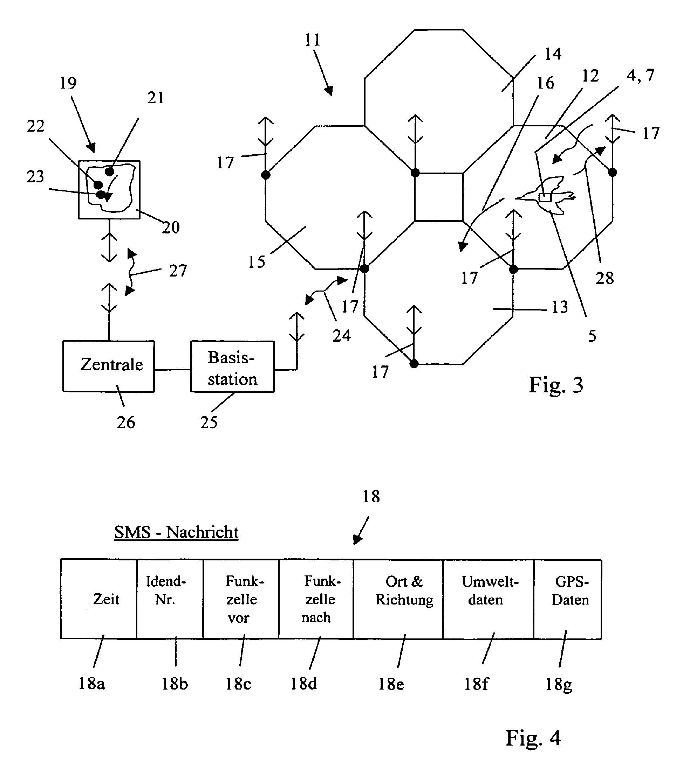

Das Positionsmodul 2 kann auch ein Mehrachsen-Beschleunigungssensor sein, der neuerdings sogenannte Kreiselkompasse ersetzt. Es ist also möglich, mit Hilfe eines Mehrachsen-Beschleunigungssensors Positionsdaten in einem Positionsmodul zu erheben, die ausgewertet und über das Mobilfunkmodul 3 als Datenübertragung der Antenne 6 zugeleitet werden. Diese sendet die entsprechend erhobenen Daten in das Mobilfunknetz gemäß Figur 3.

Die Figur 2 zeigt, dass ein solches Taubenmodul 1 relativ klein und leichtgewichtig ist und auf einer Taube 5 huckepack an der Oberseite befestigt werden kann.Das Taubenmodul 1 kann auch bei genügend kleiner und leichter Konstruktion am Fuß der Taube befestigt sein. Die Antenne 6 kann hierbei als Stab oder als lose hängender Draht oder als interne, im Modul eingebaute Chipantenne ausgebildet sein.

In Figur 3 ist ein übliches Mobilfunknetz 11, bestehend aus einer Anzahl von Mobilfunkzellen 12-15, dargestellt, wobei jede Mobilfunkzelle als kleinster geografischer Mobilfunkversorgungsbereich von einer Basisstation bedient wird und wo über einen Mobilfunkkanal die Ankopplung des GSM-Moduls 7 an der Taube 5 an eine BTS (Base Transceiver Station) stattfindet. Das GSM-Modul unterscheidet die Mobilfunkzellen über einen BSIC (Base Tranceiver Station Identity Code). Im Netz wird anhand der Cell Identity (CGI) zwischen den Zellen unterschieden. Die Mobilfunkzellen können je nach Einsatzort und Bestimmung unterschiedlich groß sein. Die nominale Zellengröße im GSM-900-System beträgt bis zu 35 km. Die Zellenverkleinerung wird unter anderem durch Mikrozellentechnik und Richtantennen erreicht. Demzufolge kann der Mobilfunkzellenradius für GSM-900 theoretisch zwischen 300 m und 35 km variiert werden. In städtischen Gebieten ist eine Mobilfunkzelle noch wesentlich kleiner und kann im Bereich von mehreren 10 m liegen.

Das GSM-Modul 7 an der fliegenden Taube 5 bucht sich nun über die Luftschnittstelle an einer BTS einer bestimmten Mobilfunkzelle 12 ein. Jede BTS 17 ist über eine weitere Luftschnittstelle 24 mit der Basisstation 25 verbunden und von dort aus werden die Signale des Mobilfunknetzes 11 einer Zentrale 26 zugeleitet, welche diese Signale über eine weitere Luftschnittstelle 27 einem Mobilfunkgerät eines Nutzers zuleitet. Der Nutzer kann über ein Nutzer-Modul 19 verfügen, welches eine grafische Anzeige 20 aufweist. Diese grafische Anzeige 20 kann beispielsweise eine ständig aktualisierte Landkarte aufweisen, in welcher die aktuelle Position 21, 22, 23 der Taube 5 im Bezug zu der jeweils überflogenen Mobilfunkzelle 12, 13, 15 angezeigt wird.

Im gezeigten Ausführungsbeispiel durchfliegt die Taube 5 die Mobilfunkzelle 12 und überfliegt danach in Pfeilrichtung 16 die Mobilfunkzelle 13, von der sie wiederum beispielsweise in die Mobilfunkzelle 15 hineingelangt.

In der allgemeinen Beschreibung wurde bereits angegeben, dass es mehrere Möglichkeiten zur Erzeugung der Positionsdaten gibt.

In einem Anwendungsfall teilt der Mobilfunknetzbetreiber aus der Zentrale 26 unmittelbar die Ortsinformation (Zellinformation) der Taube 5 über die Luftschnittstelle 27 dem bodenseitigen Nutzermodul 19 mit.

In einem anderen Anwendungsfall übermittelt der Mobilfunknetzbetreiber in der Zentrale 26 die ermittelten Ortsinformation und funkt diese über die Luftschnittstellen 24 und 28 an das GSM-Modul 7 zurück, welches daraus eine SMS-Nachricht erzeugt, die wiederum über die Luftschnittstellen 28, 24, 27 dem Benutzermodul 19 mitgeteilt wird. Statt einer SMS-Nachricht kann auch eine Direktverbindung mit einem Datenbank-Server hergestellt werden.

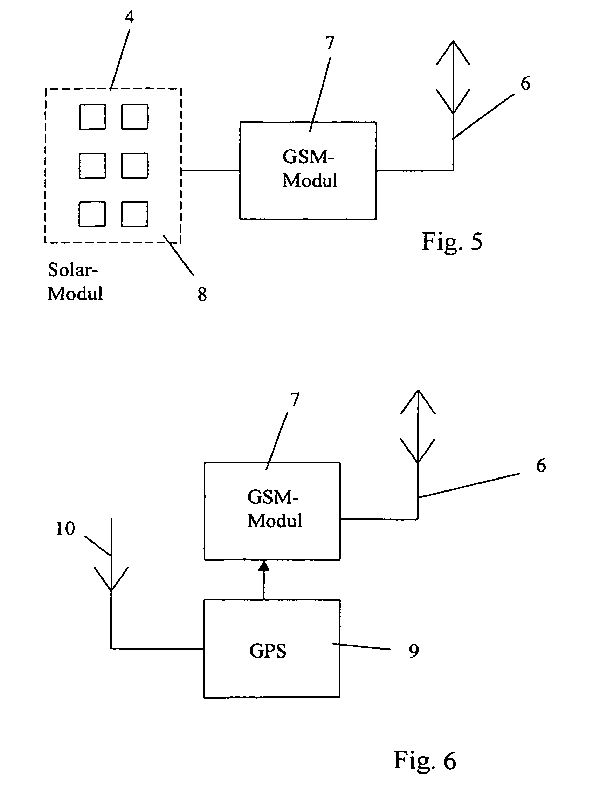

In einer dritten Variante erfolgt die Positionsermittlung unmittelbar am GSM-Modul 7 selbst, in dem beispielsweise dieses in Figur 5 dargestellte GSM-Modul 7 noch gemäß Figur 6 mit einem GPS-Modul 9 gekoppelt ist. Das GPS-Modul 9 empfängt über die Empfangsantenne 10 die entsprechenden Satellitendaten und errechnet daraus seine aktuelle Position, die in Form einer SMS-Nachricht oder einer Direktverbindungsnachricht im GSM-Modul 7 verarbeitet und über die Antenne 6 in das Mobilfunknetz 11 über die Luftschnittstelle 28 eingespeist wird.

Die Figur 5 zeigt, dass als Energieversorgung 4 Solarzellen 8 verwendet werden. Ebenso können Akkus verwendet werden.

In einer Weiterbildung der vorliegenden Erfindung ist es vorgesehen, dass das GPS-Modul 9 entfällt und stattdessen ein Kreiselmodul verwendet wird, welches aus einem mehrachsigen elektronischen Beschleunigungssensor besteht, der die Ortskoordinaten erfasst und in das GSP-Modul einspeist und hieraus eine SMS-Nachricht erzeugt, die an den Nutzer über die Luftschnittstellen 28, 24, 27 übermittelt werden.

Die Figur 4 zeigt, dass mit der SMS-Nachricht und der Übermittlung der Ortsinformationen noch eine Reihe weiterer Daten übermittelt werden kann wie
- 18a:: Zeit
- 18b:: Ident-Nummer
- 18c:: Mobilfunkzelle vorher
- 18d:: Mobilfunkzelle nachher
- 18e:: Ort und Richtung
- 18f:: Umweltdaten
- 18g:: ggf. in Verbindung mit GPS-Daten oder Kreiseldaten

### Zeichnungslegende

- 1: Taubenmodul
- 2: Positionsmodul
- 3: Mobilfunkmodul
- 4: Energieversorgung
- 5: Taube
- 6: Antenne
- 7: GSM-Modul
- 8: Solarzelle
- 9: GPS-Modul
- 10: Empfangsantenne
- 11: Mobilfunknetz
- 12: Mobilfunkzelle
- 13: Mobilfunkzelle
- 14: Mobilfunkzelle
- 15: Mobilfunkzelle
- 16: Pfeilrichtung
- 17: BTS
- 18: Nachrichtenblock
- 19: Nutzer-Modul
- 20: Grafische Anzeige
- 21: Position
- 22: Position
- 23: Position
- 24: Luftschnittstelle
- 25: Basisstation
- 26: Zentrale
- 27: Luftschnittstelle
- 28: Luftschnittstelle

## Patentansprüche

1. Verfahren zur Durchführung von Taubenrennen im Taubensport, wobei die Taube (5) mindestens ein GSM- oder UMTS- oder ein anderes zellfähiges Modul (1, 7) trägt, welches sich während des Fluges in unterschiedliche Funkzellen (12-15) eines Mobilfunknetzes (11) einbucht und eine aktuelle Ortsinformation der Taube (5) übertragen wird, **dadurch gekennzeichnet, dass** als aktuelle Ortsinformation der Taube (5) die Ortsinformation der gegenwärtig aktiven Funkzelle (12-15) dem Nutzer vom Betreiber des Mobilfunknetzes (11) mitgeteilt wird.

2. Verfahren nach Anspruch 1, **dadurch gekennzeichnet, dass** als zusätzliche aktuelle Ortsinformation die GPS-Daten eines GPS-Moduls (9), das mit dem GSM-Modul (1, 7) kombiniert ist, dem Nutzer mitgeteilt werden.

3. Verfahren nach Anspruch 1 oder 2, **dadurch gekennzeichnet, dass** die Ortsinformation der gegenwärtig aktiven Funkzelle (12-15) vom GSM-Modul (1, 7) der Taube (5) als SMS-Nachricht über das Mobilfunknetz (11) dem Nutzer mitgeteilt wird.

4. Verfahren nach Anspruch 3, **dadurch gekennzeichnet, dass** mit der Ortsinformation noch weitere Daten als Datenblöcke einer SMS-Nachricht dem Nutzer mitgeteilt werden.

5. Verfahren nach einem der Ansprüche 1 bis 4, **dadurch gekennzeichnet, dass** das GSM-Modul (1, 7) in vorbestimmten Zeitabständen die Ortsinformation übermittelt.

6. Verfahren nach einem der Ansprüche 1 bis 4, **dadurch gekennzeichnet, dass** das GSM-Modul (1, 7) auf Funkaufforderung durch den Nutzer die Ortsinformation übermittelt.

## Claims

1. Method for carrying out pigeon races in pigeon sport, wherein the pigeon (5) carries at least one GSM or UMTS module or other cell-compatible module (1, 7), which logs into different radio cells (12 to 15) of a mobile radio network (11) during the flight and current position information of the pigeon (5) is transmitted, **characterised in that** the user is informed by the operator of the mobile radio network (11) of the location information of the currently active radio cell (12 to 15), as the current location information of the pigeon (5).

2. Method according to claim 1, **characterised in that** the user is informed of the GPS data of a GPS module (9), which is combined with the GSM module (1, 7), as additional current location information.

3. Method according to claim 1 or 2, **characterised in that** the user is informed of the location information of the currently active radio cell (12 to 15) by the GSM module (1, 7) of the pigeon (5), as an SMS message via the mobile radio network (11).

4. Method according to claim 3, **characterised in that**, with the location information, the user is informed of still further data as data blocks of an SMS message.

5. Method according to any one of claims 1 to 4, **characterised in that** the GSM module (1, 7) transmits the location information at predetermined time intervals.

6. Method according to any one of claims 1 to 4, **characterised in that** the GSM module (1, 7) transmits the location information upon a radio request by the user.

## Revendications

1. Procédé pour l'exécution de courses de pigeons, dans le sport colombophile, étant précisé que le pigeon (5) porte au moins un module GSM ou UMTS ou un autre module cellulaire (1, 7) qui se connecte pendant le vol à différentes cellules (12-15) d'un réseau de téléphonie mobile (11), et qu'une information de position actuelle concernant le pigeon (5) est communiquée, **caractérisé en ce que** c'est l'information de position de la cellule (12-15) présentement active qui est communiquée par l'opérateur du réseau mobile (11) à l'utilisateur comme information de position actuelle concernant le pigeon (5).

2. Procédé selon la revendication 1, **caractérisé en ce que** les données GPS d'un module GPS (9) qui est combiné au module GSM (1, 7) sont communiquées à l'utilisateur comme information de position actuelle supplémentaire.

3. Procédé selon la revendication 1 ou 2, **caractérisé en ce que** l'information de position de la cellule (12-15) présentement active est communiquée par le module GSM (1, 7) du pigeon (5) à l'utilisateur, par l'intermédiaire du réseau mobile (11), sous forme de message SMS.

4. Procédé selon la revendication 3, **caractérisé en ce qu'**avec l'information de position, d'autres données sont encore communiquées à l'utilisateur sous forme de blocs de données d'un message SMS.

5. Procédé selon l'une des revendications 1 à 4, **caractérisé en ce que** le module GSM (1, 7) transmet l'information de position à intervalles prédéfinis.

6. Procédé selon l'une des revendications 1 à 4, **caractérisé en ce que** le module GSM (1, 7) transmet l'information de position sur demande radio de l'utilisateur.
